# EUROPEAN PATENT SPECIFICATION

(11) **EP 3 220 063 B1**
(45) Date of publication and mention of the grant of the patent: **20.01.2021**
(21) Application number: 17160938.1
(22) Date of filing: 14.03.2017
(51) Int. Cl.: F24D 3/10, F24D 11/02

(54) **A HYBRID THERMAL PLANT**
EIN HYBRIDES THERMISCHES KRAFTWERK
UNE INSTALLATION THERMIQUE HYBRIDE

(30) Priority: 14.03.2016 IT UA20161626
(43) Date of publication of application: 20.09.2017
(73) Proprietor: Riello S.p.A., 37045 Legnago (IT)
(72) Inventor: LAMBRUGHI, Stefano, 22040 Lurago d'Erba (IT); CASIRAGHI, Stefano, 23875 Osnago (IT)
(74) Representative: Andreotti, Erika

(56) References cited:
- EP-A1- 2 159 495
- EP-A1- 2 372 258
- EP-A2- 2 636 958
- WO-A1-97/08498
- DE-U1-202005 005 008

## Description

The present invention relates to a hybrid thermal plant.

In particular, the present invention relates to a plant configured to heat sanitary water intended to supply the users of a sanitary plant and to heat or cool water intended for an air conditioning plant.

Plants of this type are disclosed in documents WO9708498, EP2372258, EP2636958 and DE202005005008U. Patent EP2159495 discloses a hybrid thermal power plant according to the preamble of claim 1.

Hybrid plants of a known type comprise at least two heat sources: a heat pump and a gas boiler. However, the connection between the heat sources, the sanitary water plant and the air conditioning plant is carried out by means of a very complex connecting hydraulic circuit. Moreover, the connecting hydraulic circuit currently used does not allow an optimal exploitation of the heat sources used.

It is an object of the present invention to provide an interface module for the connection of the heat sources with the sanitary water plant and with the air conditioning plant, which simplifies the connection between the heat sources, the sanitary water plant and the air conditioning plant and at the same time allows an optimal exploitation of the heat sources used.

It is the object of the present invention to provide a hybrid thermal plant that is free from the drawbacks of the prior art described herein; in particular, it is an object of the invention to provide a hybrid thermal plant having a simplified structure, which also allows an optimal exploitation of the heat sources of the plant itself.

Further features and advantages of the present invention will be apparent from the following description of a non-limiting embodiment thereof, with reference to the figures of the accompanying drawings, wherein:
- Figure 1 is a schematic representation of a hybrid thermal plant according to the present invention in a first operating configuration;
- Figure 2 is a schematic representation of a hybrid thermal plant according to the present invention in a second operating configuration;

- Figure 3 is a schematic representation of a hybrid thermal plant according to the present invention in a third operating configuration;
- Figure 4 is a schematic and perspective view, with parts in section and parts removed for clarity, of an interface module according to the present invention.

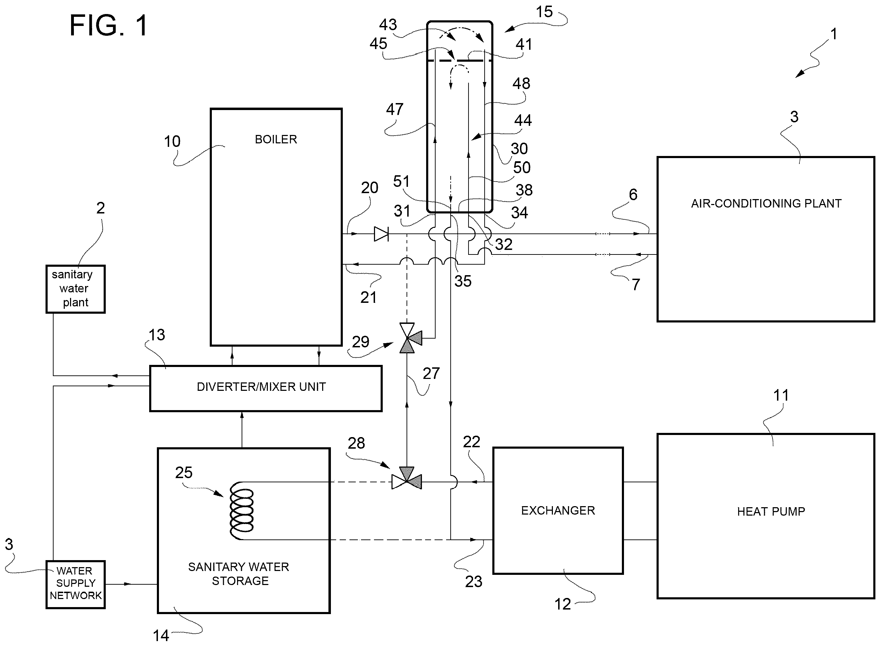

In Figure 1, reference number 1 indicates a hybrid thermal plant connected to a sanitary water plant 2 and to an air-conditioning plant 3.

The sanitary water plant 2 supplies households (known and not illustrated for the sake of simplicity in the attached figures) with sanitary water coming from a water supply network 5 and heated by the plant 1 as described in detail later.

The air conditioning plant 3 comprises a plurality of heat exchange devices (not shown for the sake of simplicity in the attached figures) configured for exchanging heat in air-conditioned environments. The heat exchange devices may be of the low temperature type (such as panels or floor heating ducts) or of the high temperature type (e.g. radiators, fan coils, towel warmers, etc.).

The air conditioning plant 3 is connected to the plant 1 via an air conditioning supply conduit 6 and an air conditioning return conduit 7.

The air conditioning supply conduit 6 supplies the air-conditioning plant 3 with technical water heated or cooled by the plant 1.

The air conditioning return conduit 7 supplies the system 1 with the technical water returning from the air-conditioning plant 3 that has undergone heat exchange in the heat exchange devices.

The plant 1 comprises a boiler 10, a heat pump 11, a heat exchanger 12 associated with the heat pump 11, a storage device 14 configured to store sanitary water and associated with the heat pump 11 and the boiler 10, a diverter/mixer unit 13 associated with the storage device 14 and the boiler 10, and an interface module 15.

The boiler 10 is a gas boiler preferably of the condensation type and is provided with a boiler supply conduit 20 and a boiler return conduit 21.

The boiler supply conduit 20 is supplied with technical water heated by the burner (not shown for simplicity) of the boiler 20.

The boiler return conduit 21 is supplied with technical water coming from, as explained in more detail later, the interface module 15.

The heat pump 11 is a heat pump in which a coolant flows.

The heat pump 11 can be operated in sanitary mode to heat the sanitary water in the storage device 14 or in air-conditioning mode to serve the air-conditioning plant 3.

In the air-conditioning mode, the heat pump 11 can be selectively operated in heating mode or cooling mode.

The heat pump 11 is associated with a heat exchanger 12 configured to selectively heat or cool the technical water of the plant 1.

A variant provides for the use of a reverse cycle air/water monobloc heat pump. In this configuration the heat exchanger is not necessary and the heat pump is able to selectively heat or cool the technical water of the plant.

The heat exchanger 12 is crossed by a conduit (not shown) in which technical water flows and by a conduit (not shown) in which the coolant flows.

When the heat pump 11 operates in heating mode, the heat exchanger 12 receives the hot cooling fluid from the heat pump 12 and transfers the heat to the technical water that runs through it.

When the heat pump 11 operates in cooling mode, the heat exchanger 12 receives the cold cooling fluid from the heat pump 12 and transfers the heat to the cooling fluid, cooling the technical water running through it.

The heat exchanger 12 is coupled to a heat pump supply conduit 22 and to a heat pump return conduit 23.

The heat pump supply conduit 22 is supplied with technical water heated or cooled by the heat pump 11 via the heat exchanger 12.

The heat pump return conduit 23 is supplied with technical water coming from, as explained in more detail later, the interface module 15.

In the non-limiting example described and illustrated herein, the heat pump supply conduit 22 and the heat pump return conduit 23 are connected to a heat exchange coil 25 arranged inside the storage device 14. In this way, the heat pump 11 can also contribute to the heating of the sanitary water.

The heat pump supply conduit 22 is also connected to an intermediate supply conduit 27 couplable to the air-conditioning supply conduit 6 or to the interface module 15.

A three-way diverter valve 28 operates the connection between the heat pump supply conduit 22 and the heat exchange coil 25 or the intermediate supply conduit 27. In particular, the diverter valve 28 is configured to:
- connect the heat pump supply conduit 22 exclusively to the coil 25 both in summer and in winter when the heat pump 11 is in sanitary mode and the contribution of the heat pump 11 to the air-conditioning plant 3 is not necessary;
- connect the heat pump supply conduit 22 exclusively to the intermediate supply conduit 27 in the summer season when the heat pump 11 is in air-conditioning and cooling mode;
- connect the heat pump supply conduit 22 exclusively to the intermediate supply conduit 27 in winter or in the intermediate seasons when the heat pump 11 is in air-conditioning and heating mode.

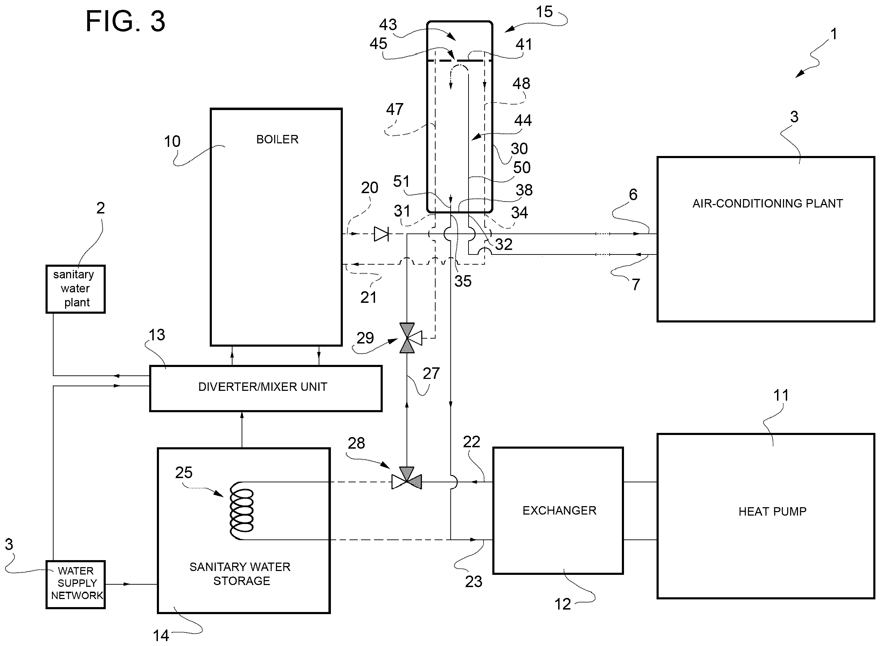

A three-way diverter valve 29 operates the connection between the intermediate conduit 27 and the supply conduit to the air-conditioning plant 6 or to the interface module 15. In particular, the diverter valve 29 is configured to:
- connect the intermediate conduit 27 exclusively to the air-conditioning supply conduit 6 both in summer and in winter when the heat pump 11 is in air-conditioning mode and the contribution of the boiler 10 to the air-conditioning plant 3 is not necessary (configuration in Figure 3);
- connect the intermediate conduit 27 exclusively to the interface module 15 in the winter season when the heat pump 11 is in air-conditioning and heating mode and the contribution of the boiler 10 to the air-conditioning plant 3 is necessary (configuration in Figure 1).
The storage device 14 is a sanitary water tank configured to store sanitary water heated by the heat pump 11 as described above through the heat exchanger 12 and the heat exchange coil 25.

A non-illustrated variant provides that the storage device 14 is coupled to a further heat source of the plant 1, such as for example a solar plant.

The sanitary water stored in the storage device 14 is supplied to the mixer/diverter unit 13.

The mixer/diverter unit 13 is configured to:
- supply the sanitary plant 2 with the sanitary water coming from the storage device 14 if the temperature of the sanitary water coming from the storage device 14 meets the needs of the users of the sanitary plant 2;
- mix the sanitary water heated by the storage device 14 with the sanitary water heated by the boiler 2 and supply the mixture to the sanitary plant 2 if the temperature of the sanitary water coming from the storage device 14 does not meet the needs of the users of the sanitary plant 2;
- supply the sanitary plant 2 with the sanitary water heated by the boiler 2 if the heat pump 11 or any additional thermal sources associated with the storage device 14 are not active.

The interface module 15 comprises a tank 30, a first inlet 31 coupled to the heat pump supply conduit 22 (via the diverter valve 29 and the intermediate supply conduit 27), a second inlet 32 coupled to the air-conditioning return conduit 7, a first outlet 34 coupled to the boiler return conduit 21 and a second outlet 35 coupled to the heat pump return conduit 23.

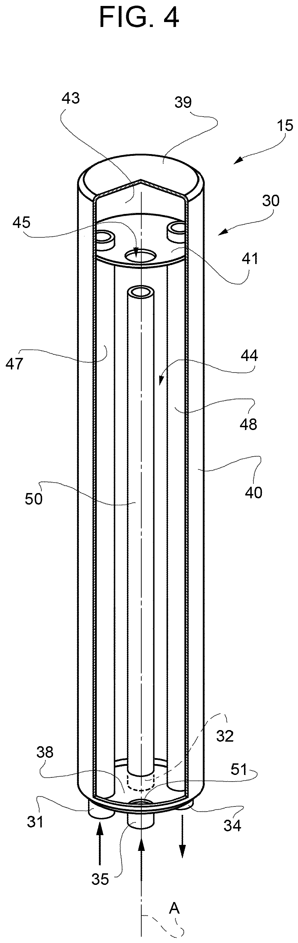

With reference to Figure 4, the tank 30 extends along a longitudinal axis A and has a substantially cylindrical shape. In use, the longitudinal axis A is arranged vertically.

The tank 30 is provided with a bottom wall 38 orthogonal to axis A, a top wall 39 orthogonal to axis A, and a lateral wall 40 parallel to axis A.

The tank 30 is also provided with a separating septum 41, which preferably extends orthogonally to axis A.

The separating septum 41 divides the tank into a first chamber 43 and a second chamber 44.

The first chamber 43 is defined by the top wall 39, the separating septum 41 and a portion of the lateral wall 40.

The second chamber 44 is defined by the bottom wall 38, the separating septum 41 and the remaining portion of the lateral wall 40.

Preferably, the separating septum 41 is arranged in the upper half of the tank 30 so as to define a second chamber 44 having a volume greater than the volume of the first chamber 43.

In particular, the volume of the second chamber 44 is typically defined in accordance with the power of the heat pump 11, as explained in more detail later.

The first chamber 43 must be dimensioned so as to define a sufficiently large section to adequately slow down the flow of technical water running through it, as will be discussed in detail later.

The separating septum 41 is provided with at least one through opening 45 preferably shaped so as to allow the passage of a given flow rate of technical water between the first chamber 43 and the second chamber 44.

In the non-limiting example described and illustrated herein, the opening 45 has a circular cross section.

A variant provides that the separating septum is equipped with a plurality of openings shaped so as to allow the passage of the desired flow rate of technical water.

The first inlet 31 and the first outlet 34 are in communication with the first chamber 43.

The second inlet 32 and the second outlet 35 are in communication with the second chamber 44.

In the non-limiting example described and illustrated herein, the first inlet 31 and the first outlet 34, the second inlet 32 and the second outlet 35 are provided on the bottom wall 38 of the tank 30.

In this way, the layout of the interface module 15 is simplified and the connection with the boiler 10, the heat pump 11 and the air-conditioning plant 3 is facilitated.

In order to connect the first inlet 31 and the first outlet 34 to the first chamber 43, the interface module 15 is provided with a first inlet conduit 47 coupled to the first inlet 31 and with a first outlet conduit 48 coupled to the first outlet 34.

The first inlet conduit 47 and the first outlet conduit 48 extend inside the second chamber 44, pass through the separating septum 41 and come out into the first chamber 43.

Preferably, the first inlet conduit 47 and the first outlet conduit 48 extend parallel to axis A.

Preferably, the first inlet conduit 47 and the first outlet conduit 48 have the same axial length and extend above the separating septum 41.

More preferably, the first inlet conduit 47 and the first outlet conduit 48 extend as little as possible into the first chamber 43. Due to the fact that the conduits have the same axial length and extend just above the separating septum 41, the water coming from the first inlet conduit 47 goes towards the first outlet conduit 48, minimizing the volume required for the first chamber 43.

Preferably, the interface module 15 comprises a second inlet conduit 50 coupled to the second inlet 32, and a second outlet conduit 51 coupled to the second outlet 35.

In the non-limiting example described and illustrated herein, the second inlet 32 and the second outlet 35 are provided on the bottom wall 38. Therefore, the second inlet conduit 50 and the second outlet conduit 51 are not designed to connect the second inlet 32 and the second outlet 35 to the second chamber 44, but are designed to define points of entry and discharge of the technical water at different heights.

In particular, the second inlet conduit 50 has an axial length greater than the axial length of the second outlet conduit 51.

The difference in axial length between the second inlet conduit 50 and the second outlet conduit 51 allows exploiting the whole volume of the chamber 44 as inertial storage of technical water returning from the air-conditioning plant 3. This allows the heat pump 11 off cycles to be reduced, thereby optimizing, as explained in detail later on, both the performance in terms of SCOP and the reliability of the compressor of the pump 11.

In particular, the second inlet conduit 50 extends within the second chamber 44 over an axial length such as to define an entry point as close as possible to the separating septum 41, whereas the second outlet conduit 51 extends within the second chamber 44 over an axial length such as to define a discharge point as close as possible to the bottom wall 38.

The minimum distance between the second inlet conduit 50 and the separating septum 41 is equal to the diameter of the second inlet conduit 50.

The second outlet conduit 51 may have an axial height within the second chamber 44 that is derisory or even equal to zero.

In this way, the working volume of the second chamber 44 is maximized and the water outflow within the second chamber 44 is suitably slowed down.

The first inlet conduit 47, the first outlet conduit 48, the second inlet conduit 50, the second outlet conduit 51 are preferably made of a plastic material.

A non-illustrated variant provides that the first inlet conduit 47, the first outlet conduit 48, the second inlet conduit 50, the second outlet conduit 51 are made of a thermally insulating material.

Preferably, the opening 45 is located as far away as possible from the second inlet conduit 50 so as to prevent the passage of fluid between the first chamber 43 and the second chamber 44 when not required.

Preferably, the interface module 15, the heat exchanger 12 and the related accessory components (for example the diverter valve 28, the diverter valve 29 and other components not illustrated or described) are housed in a casing (not illustrated in the accompanying figures). The casing can be coupled to the boiler 10, making the plant 1 according to the present invention compact.

Figure 1 shows a winter use configuration of the plant 1 according to the present invention.

In this configuration, the boiler 10 and the heat pump 11 are active and contribute to heat the technical water to be supplied to the air-conditioning plant 3.

In particular, when they are both active, the heat pump 11 and the boiler are connected in series by the interface module 15. In particular, the interface module 15 is configured so as to supply the boiler 10 with the technical water heated by the heat pump 11. The technical water of the heat pump supply conduit 22 is sent, through the first inlet 31 and the first inlet conduit 47 to the first chamber 43 and is sucked from the boiler 10 through the first outlet conduit 48, the first outlet 34 and the boiler return conduit 21. In this way, the boiler 10 will have to heat technical water that is already hot and coming from the heat pump 11, allowing overcoming the power and/or temperature limitations of the heat pump.

In this configuration, the interface module 15 is also configured for supplying the technical water returning from the air-conditioning plant 3 to the heat pump 11 passing through the second chamber 44 of the interface module 15. The technical water of the air-conditioning return conduit 7 is sent, through the second inlet 32 and the second inlet conduit 50 to the second chamber 44 and sucked from the heat pump 11 through the second outlet conduit 51, the second outlet 35 and the heat pump return conduit 23.

Due to the particular structure of the interface module 15, the return water from the air-conditioning plant 3 enters a portion of the chamber 43 in the proximity of the separating septum 41 and exits in the proximity of the bottom wall 38 substantially running along the whole length of the second chamber 44. In this way, the technical water that is sent to the heat pump 11 is water having the lowest possible temperature and the performance of the heat pump 11 is optimized in terms of COP.

Experimental tests have shown that in the configuration of Figure 1, the mixing between the technical water circulating in the first chamber 43 and the technical water circulating in the second chamber 44 is non-existent or minimum and in any case not such as to determine undesired variations in the temperature of the technical water in the respective chambers 43 and 44.

Moreover, experimental tests have shown that the maximum flow rates in the first chamber 43 and the second chamber 44 are less than 2 m/s. As a result, load losses in flow passages through the interface module are minimal.

Thanks to the limited flow rates, even the noise of the interface module 15 is not excessive or disturbing.

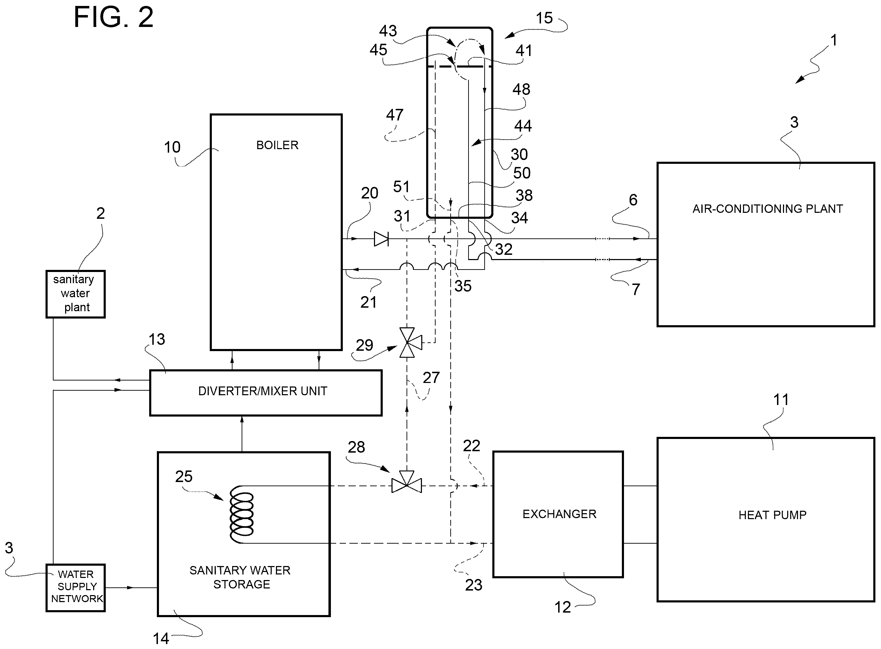

Figure 2 shows a second winter use configuration of the plant 1 according to the present invention. Figure 2 shows the non-operating conduits with dashed lines.

In this configuration, the boiler 10 is active and the heat pump 11 is deactivated.

The boiler 10 is therefore designed to heat the technical water to be supplied to the air-conditioning plant 3.

In the non-limiting example described and illustrated herein, the heat pump 11 does not heat the storage device 14. However, it is possible to provide for an independent operation of the heat pump 11 in sanitary mode to heat the storage device 14.

In this situation, the interface module 15 is configured for supplying the technical water returning from the air-conditioning plant 3 to the boiler 10 passing through the second chamber 44 and the first chamber 43 of the interface module 15.

In particular, the technical water of the air-conditioning return conduit 7 is sent, through the second inlet 32 and the second inlet conduit 50 to the second chamber 44 and sucked from the boiler 10 through the first outlet conduit 48, the first outlet 34 and the boiler return conduit 21.

The technical water arrived in the second chamber 44 goes into the first chamber 43 through the opening 45 of the separating septum 41.

Thanks to the particular position of the separating septum 41 and to the shape of the opening 45, load losses during the passage from the second chamber 44 to the first chamber 45 are not significant. In this way, the circulating flow rate does not undergo variations in the transition from the condition with two active generators to that wherein only the boiler 10 is operative.

Experimental tests have also shown that the flow passage through the separating septum 41 occurs at speeds that do not cause significant noise levels.

Figure 3 shows a third configuration of use of the plant 1 according to the present invention. Figure 3 shows the non-operating conduits with dashed lines.

In this configuration, the heat pump 11 is active in air-conditioning mode, whereas the boiler 10 is deactivated for the air-conditioning function and active for the sanitary water heating function (through the mixer/diverter unit 13) .

If the heat pump 11 is in heating mode, the heat pump 11 is therefore designed to heat the technical water to be supplied to the air-conditioning plant 3.

If the heat pump 11 is in cooling mode, the heat pump 11 is designed to cool the technical water to be supplied to the air-conditioning plant 3.

In this situation, the interface module 15 is configured for supplying the technical water returning from the air-conditioning plant 3 to the heat pump 11 passing through the second chamber 44 of the interface module 15. The technical water of the air-conditioning return conduit 7 is sent, through the second inlet 32 and the second inlet conduit 50 to the second chamber 44 and sucked from the heat pump 11 through the second outlet conduit 51, the second outlet 35 and the heat pump return conduit 23.

Due to the particular structure of the interface module 15, the return water from the air-conditioning plant 3 enters a portion of the chamber 44 in the proximity of the separating septum 41 and exits in the proximity of the bottom wall 38 substantially running along the whole length of the second chamber 44. This creates an inertial water storage volume, which has the purpose of reducing the compressor off cycles of the heat pump 11, optimizing the SCOP (seasonal COP) and improving reliability.

Advantageously, the interface module 15 according to the present invention is capable of simultaneously performing a first hydraulic separator function and a second inertial storage function for the heat pump 11.

Furthermore, the interface module 15 according to the present invention simplifies the hydraulic plan of the hybrid thermal plant according to the present invention. In this way, the structure of the hybrid thermal plant according to the present invention is simplified with respect to the structure of hybrid thermal plants of a known type.

Lastly, it is clear that modifications and variations may be made to the interface module and plant described herein without departing from the scope of the appended claims.

## Claims

1. A hybrid thermal plant (1) comprising:
a boiler (10) provided with a burner, a boiler supply conduit (20) supplied with technical water heated by the burner, and a boiler return conduit (21);
a heat pump (11) provided with a heat pump supply conduit (22) supplied with technical water heated or cooled, directly or indirectly, by the heat pump (11), and a heat pump return conduit (23);
an interface module (15) comprising:
• a first inlet (31) coupled to the heat pump supply conduit (22) configured to receive technical water heated by a heat pump (11);
• a second inlet (32) coupled to the air-conditioning return conduit (7) configured to receive return technical water from an air-conditioning plant (3);
• a first outlet (34) coupled to the boiler return conduit (21) configured to supply return technical water to the boiler (10);
• a second outlet (35) coupled to the heat pump return conduit (23) configured to supply return technical water to the heat pump (11); **characterized in that** the interface module (15) being configured so as to selectively connect the first inlet (31) with the first outlet (34) and/or the second inlet (32) with the second outlet (35) or the second inlet (32) with the first outlet (34) on the basis of the operative conditions of the boiler (10) and of the heat pump (11); the interface module (15) comprising a tank (30) provided with a separating septum (41) adapted to divide the tank (30) into a first chamber (43) in communication with the first inlet (31) and the first outlet (34), and a second chamber (44) in communication with the second inlet (32) and the second outlet (35).

2. The plant according to claim 1, wherein the interface module (15) is configured to:
• connect the first inlet (31) with the first outlet (34) and the second inlet (32) with the second outlet (35) when the heat pump (11) and the boiler (10) are both active in air-conditioning mode;
• connect the second inlet (32) with the second outlet (35) when only the heat pump (11) is active in air-conditioning mode;
• connect the second inlet (32) with the first outlet (34) when only the boiler (10) is active in air-conditioning mode.

3. The plant according to claim 1 or 2, wherein the tank (30) has a shape which is substantially elongated along a longitudinal axis (A).

4. The plant according to claim 3, wherein the separating septum (41) is provided with at least one, preferably circular, opening (45).

5. The plant according to claim 4, wherein the separating septum (41) is arranged substantially orthogonal to the longitudinal axis (A).

6. The plant according to any one of the foregoing claims, wherein the first inlet (31), the second inlet (32), the first outlet (34) and the second outlet (35) are provided on a same wall (38) of the tank (30).

7. The plant according to any one of the foregoing claims, wherein the first inlet (31), the second inlet (32), the first outlet (34) and the second outlet (35) are provided on a bottom wall (38) of the tank (30).

8. The plant according to any one of the claims from 3 to 7, wherein the longitudinal axis (A) is arranged, in use, substantially vertical.

9. The plant according to any one of claims from 3 to 7, comprising a first inlet conduit (47) coupled to the first inlet (32) and configured to come out into the first chamber (43) and a first outlet conduit (48) coupled to the first outlet (34) and configured to come out into the first chamber (43) .

10. The plant according to claim 9, wherein the first inlet conduit (47) and the first outlet conduit (48) are parallel to the axis (A).

11. The plant according to claim 9 or 10, wherein the first inlet conduit (47) and the first outlet conduit (48) have the same axial length.

12. The plant according to any one of claims from 9 to 11, wherein the first inlet conduit (47) and the first outlet conduit (48) go through the separating septum (41).

13. The plant according to any one of claims from 9 to 12, wherein the first inlet conduit (47) and the first outlet conduit (48) extend above the separating septum (41).

14. The plant according to any one of claims from 3 to 13, comprising a second inlet conduit (50) coupled to the second inlet (32) and configured to come out into the second chamber (44) and a second outlet conduit (51) coupled to the second outlet (35) and configured to come out into the second chamber (44) .

15. The plant according to claim 14, wherein the second inlet conduit (50) and the second outlet conduit (51) are parallel to the longitudinal axis (A); the second inlet conduit (50) having an axial length greater than the axial length of the second outlet conduit (51).

16. The plant according to claim 14 or 15, wherein the second inlet conduit (50) comes out into the second chamber (44) in a position as closest as possible to the separating septum (41).

17. The plant according to claim 16, wherein the second inlet conduit (50) comes out into the second chamber (44) in a position which is at a distance from the separating septum (41) equal to the diameter of the second inlet conduit (50).

18. The plant according to any one of claims from 14 to 17, wherein the second outlet conduit (51) comes out into the second chamber (44) in a position as closest as possible to the bottom wall (38).

## Patentansprüche

1. Eine hybride thermische Anlage (1) aufweisend:
einen Boiler (10), der mit einem Brenner versehen ist, eine Boiler-Versorgungsleitung (20), die mit von dem Brenner erhitzten technischen Wasser versorgt wird, und eine Boiler-Rücklaufleitung (21);
eine Wärmepumpe (11), die mit einer Wärmepumpen-Versorgungsleitung (22) versehen ist, die mit erwärmten oder gekühlten technischen Wasser versorgt wird, direkt oder indirekt, durch die Wärmepumpe (11), und eine Wärmepumpen-Rücklaufleitung (23);
ein Interface-Modul (15) aufweisend:
- einen mit der Wärmepumpen-Versorgungsleitung (22) verbundenen ersten Einlass (31), der ausgebildet ist, um durch eine Wärmepumpe (11) erwärmtes technisches Wasser zu erhalten;
- einen mit der Klimatisierungsrücklaufleitung (7) verbunden zweiten Einlass (32), der konfiguriert ist, um von einer Klimatisierungseinrichtung (3) technisches Rücklaufwasser zu erhalten;
- einen mit der Boiler-Rücklaufleitung (21) verbundenen ersten Auslass (34), der ausgebildet ist, um den Boiler (10) mit technischen Rücklaufwasser zu versorgen;
- einen mit Wärmepumpen-Rücklaufleitung (23) verbunden zweiten Auslass (35), der ausgebildet ist, um die Wärmepumpe (11) mit technischen Rücklaufwasser zu versorgen;
**dadurch gekennzeichnet, dass**
das Interface Modul (15) derart ausgebildet ist, dass dieses wahlweise den ersten Einlass (31) mit dem ersten Auslass (34) und/oder den zweiten Einlass (32) mit dem zweiten Auslass (35) oder den zweiten Einlass (32) mit dem ersten Auslass (34) auf der Grundlage der Betriebsbedingungen des Boilers (10) und der Wärmepumpe (11) verbindet; wobei das Interface-Modul (15) einen Tank (30) aufweist, der mit einen separierenden Septum (41) versehen ist, welches den Tank in eine erste Kammer (43), die mit dem ersten Einlass (31) und dem ersten Auslass (34) in Verbindung steht, und in eine zweite Kammer (44), die mit dem zweiten Einlass (32) und dem zweiten Auslass (35) in Verbindung steht, unterteilt.

2. Die Anlage nach Anspruch 1, wobei das Interface-Modul (15) ausgebildet ist, um:
- den ersten Einlass (31) mit dem ersten Auslass (34) und den zweiten Einlass (32) mit dem zweiten Auslass (35) zu verbinden, wenn sowohl die Wärmepumpe (11) und als auch der Boiler (10) in dem Klimaanlagenmodus betrieben werden;
- den zweiten Einlass (32) mit dem zweiten Auslass (35) zu verbinden, wenn nur die Wärmepumpe (11) in dem Klimaanlagenmodus betrieben wird;
- den zweiten Einlass (32) mit dem ersten Auslass (34) zu verbinden, wenn nur der Boiler (10) in dem Klimaanlagenmodus betrieben wird.

3. Die Anlage nach Anspruch 1 oder 2, wobei der Tank (30) eine im Wesentlichen entlang einer Längsachse (A) sich erstreckende Ausbildung hat.

4. Die Anlage nach Anspruch 3, wobei das separierende Septum (41) mit mindestens einer, vorzugsweise kreisförmigen, Öffnung (45) versehen ist.

5. Die Anlage nach Anspruch 4, wobei das separierende Septum (41) im Wesentlichen orthogonal zu der Längsachse (A) angeordnet ist.

6. Die Anlage nach irgendeinem der vorhergehenden Ansprüche, wobei der erste Einlass (31), der zweite Einlass (32), der erste Auslass (34) und der zweite Auslass (35) an derselben Wand (38) des Tanks (30) vorgesehen sind.

7. Die Anlage nach irgendeinem der vorhergehenden Ansprüche, wobei der erste Einlass (31), der zweite Einlass (32), der erste Auslass (34) und der zweite Auslass (35) an einer Bodenwand (38) des Tanks (30) vorgesehen sind.

8. Die Anlage nach irgendeinem der vorhergehenden Ansprüche 3 bis 7, wobei die Längsachse (A), im Betrieb, im Wesentlichen vertikal angeordnet ist.

9. Die Anlage nach irgendeinem der vorhergehenden Ansprüche 3 bis 7 aufweisend eine erste Einlassleitung (47), die mit dem ersten Einlass (32) verbunden ist und ausgebildet ist, um sich in die erste Kammer (43) zu erstrecken, und eine erste Auslassleitung (48), die mit dem ersten Auslass (34) verbunden ist und ausgebildet ist, um sich in die erste Kammer (43) zu erstrecken.

10. Die Anlage nach Anspruch 9, wobei die erste Einlassleitung (47) und die erste Auslassleitung (48) zu der Achse (A) parallel sind.

11. Die Anlage nach Anspruch 9 oder 10, wobei die erste Einlassleitung (47) und die erste Auslassleitung (48) dieselbe axiale Länge haben.

12. Die Anlage nach irgendeinem der Ansprüche 9 bis 11, wobei sich die erste Einlassleitung (47) und die erste Auslassleitung (48) durch das separierende Septum (41) erstrecken.

13. Die Anlage nach irgendeinem der Ansprüche 9 bis 12, wobei sich die erste Einlassleitung (47) und die erste Auslassleitung (48) über das separierende Septum (41) hinaus erstrecken.

14. Die Anlage nach irgendeinem der vorhergehenden Ansprüche 3 bis 13 aufweisend eine zweite Einlassleitung (50), die mit dem zweiten Einlass (32) verbunden ist und ausgebildet ist, um sich in die zweite Kammer (44) zu erstrecken, und eine zweite Auslassleitung (51), die mit dem zweiten Auslass (51) verbunden ist und ausgebildet ist, um sich in die zweite Kammer (44) zu erstrecken.

15. Die Anlage nach Anspruch 14, wobei die zweite Einlassleitung (50) und die zweite Auslassleitung (51) zu der Längsachse (A) parallel sind; die zweite Einlassleitung (50) ein axiale Länge hat, die größer als die axiale Läge der zweiten Auslassleitung (51) ist.

16. Die Anlage nach Anspruch 14 oder 15, wobei sich die zweite Einlassleitung (50) in die zweite Kammer (44) in einer Position so nahe wie möglich zu dem separierenden Septum (41) erstreckt.

17. Die Anlage nach Anspruch 16, wobei sich die zweite Einlassleitung (50) in die zweite Kammer (44) in einer Position, die in einem Abstand zu dem separierenden Septum (41) ist, der gleich dem Durchmesser der zweiten Einlassleitung (50) ist, erstreckt.

18. Die Anlage nach irgendeinem der Ansprüche 14 bis 17, wobei sich die zweite Einlassleitung (50) in die zweite Kammer (44) in einer Position so nahe wie möglich zu der Bodenwand (38) erstreckt.

## Revendications

1. Installation thermique hybride (1) comprenant :
une chaudière (10) prévue avec un brûleur, un conduit d'alimentation de chaudière (20) alimenté avec de l'eau technique chauffée par le brûleur, et un conduit de retour de chaudière (21) ;
une pompe à chaleur (11) prévue avec un conduit d'alimentation de pompe à chaleur (22) alimentée avec de l'eau technique chauffée ou refroidie, directement ou indirectement, par la pompe à chaleur (11), et un conduit de retour de pompe à chaleur (23) ;
un module d'interface (15) comprenant :
une première entrée (31) couplée au conduit d'alimentation de pompe à chaleur (22) configuré pour recevoir l'eau technique chauffée par une pompe à chaleur (11) ;
une seconde entrée (32) couplée à un conduit de retour de climatisation (7) configuré pour recevoir l'eau technique de retour d'une installation de climatisation (3) ;
une première sortie (34) couplée au conduit de retour de chaudière (21) configuré pour amener l'eau technique de retour à la chaudière (10) ;
une seconde sortie (35) couplée au conduit de retour de pompe à chaleur (23) configuré pour amener l'eau technique de retour à la pompe à chaleur (11) ;
**caractérisée en ce que** :
le module d'interface (15) étant configuré afin de raccorder sélectivement la première entrée (31) avec la première sortie (34) et/ou la seconde entrée (32) avec la seconde sortie (35) ou la seconde entrée (32) avec la première sortie (34) sur la base des conditions opérationnelles de la chaudière (10) et de la pompe à chaleur (11) ; le module d'interface (15) comprenant un réservoir (30) prévu avec un septum de séparation (41) adapté pour diviser le réservoir (30) en une première chambre (43) en communication avec la première entrée (31) et la première sortie (34), et en une seconde chambre (44) en communication avec la seconde entrée (32) et la seconde sortie (35).

2. Installation selon la revendication 1, dans laquelle le module d'interface (15) est configuré pour :
raccorder la première entrée (31) avec la première sortie (34) et la seconde entrée (32) avec la seconde sortie (35) lorsque la pompe à chaleur (11) et la chaudière (10) sont toutes deux actives en mode climatisation ;
raccorder la seconde entrée (32) avec la seconde sortie (35) lorsque seule la pompe à chaleur (11) est active en mode climatisation ;
raccorder la seconde entrée (32) avec la première sortie (34) lorsque seule la chaudière (10) est active en mode climatisation.

3. Installation selon la revendication 1 ou 2, dans laquelle le réservoir (30) a une forme qui est sensiblement allongée le long d'un axe longitudinal (A).

4. Installation selon la revendication 3, dans laquelle le septum de séparation (41) est prévu avec au moins une ouverture (45), de préférence circulaire.

5. Installation selon la revendication 4, dans laquelle le septum de séparation (41) est agencé sensiblement orthogonalement par rapport à l'axe longitudinal (A).

6. Installation selon l'une quelconque des revendications précédentes, dans laquelle la première entrée (31), la seconde entrée (32), la première sortie (34) et la seconde sortie (35) sont prévues sur une même paroi (38) du réservoir (30).

7. Installation selon l'une quelconque des revendications précédentes, dans laquelle la première entrée (31) et la seconde entrée (32), la première sortie (34) et la seconde sortie (35) sont prévues sur une paroi inférieure (38) du réservoir (30).

8. Installation selon l'une quelconque des revendications 3 à 7, dans laquelle l'axe longitudinal (A) est agencé, à l'usage, sensiblement verticalement.

9. Installation selon l'une quelconque des revendications 3 à 7, comprenant un premier conduit d'entrée (47) couplé à la première entrée (32) et configuré pour sortir dans la première chambre (43) et un premier conduit de sortie (48) couplé à la première sortie (34) et configuré pour sortir dans la première chambre (43).

10. Installation selon la revendication 9, dans laquelle le premier conduit d'entrée (47) et le premier conduit de sortie (48) sont parallèles à l'axe (A).

11. Installation selon la revendication 9 ou 10, dans laquelle le premier conduit d'entrée (47) et le premier conduit de sortie (48) ont la même longueur axiale.

12. Installation selon l'une quelconque des revendications 9 à 11, dans laquelle le premier conduit d'entrée (47) et le premier conduit de sortie (48) traversent le septum de séparation (41).

13. Installation selon l'une quelconque des revendications 9 à 12, dans laquelle le premier conduit d'entrée (47) et le premier conduit de sortie (48) s'étendent au-dessus du septum de séparation (41).

14. Installation selon l'une quelconque des revendications 3 à 13, comprenant un second conduit d'entrée (50) couplé à la seconde entrée (32) et configuré pour sortir dans la seconde chambre (44) et un second conduit de sortie (51) couplé à la seconde sortie (35) et configuré pour sortir dans la seconde chambre (44).

15. Installation selon la revendication 14, dans laquelle le second conduit d'entrée (50) et le second conduit de sortie (51) sont parallèles à l'axe longitudinal (A) ; le second conduit d'entrée (50) ayant une longueur axiale supérieure à la longueur axiale du second conduit de sortie (51).

16. Installation selon la revendication 14 ou 15, dans laquelle le second conduit d'entrée (50) sort dans la seconde chambre (44) dans une position aussi proche que possible du septum de séparation (41).

17. Installation selon la revendication 16, dans laquelle le second conduit d'entrée (50) sort dans la seconde chambre (44) dans une position qui est à une certaine distance du septum de séparation (41) égal au diamètre du second conduit d'entrée (50).

18. Installation selon l'une quelconque des revendications 14 à 17, dans laquelle le second conduit de sortie (51) sort dans la seconde chambre (44) dans une position aussi proche que possible de la paroi inférieure (38) .
